# EUROPÄISCHE PATENTSCHRIFT

(11) **EP 3 191 329 B1**
(45) Veröffentlichungstag und Bekanntmachung des Hinweises auf die Patenterteilung: **29.04.2020**
(21) Anmeldenummer: 15763870.1
(22) Anmeldetag: 10.09.2015
(51) Int. Cl.: B60H 1/00

(54) **FAHRZEUGTEMPERIERSYSTEM UND FAHRZEUG, UMFASSEND EIN FAHRZEUGTEMPERIERSYSTEM**
VEHICLE TEMPERATURE-CONTROL SYSTEM AND VEHICLE COMPRISING A VEHICLE TEMPERATURE-CONTROL SYSTEM
SYSTÈME DE CLIMATISATION DE VÉHICULE ET VÉHICULE COMPRENANT UN SYSTÈME DE CLIMATISATION DE VÉHICULE

(30) Priorität: 10.09.2014 DE 102014218111; 22.09.2014 DE 102014219042
(43) Veröffentlichungstag der Anmeldung: 19.07.2017
(73) Patentinhaber: Eberspächer Sütrak GmbH & Co. KG, 71272 Renningen (DE)
(72) Erfinder: MALLEK, Andreas Johann, 71272 Renningen (DE)
(74) Vertreter: Ruttensperger Lachnit Trossin Gomoll
(86) Internationale Anmeldenummer: PCT/EP2015/070683
(87) Internationale Veröffentlichungsnummer: WO 2016/038125

(56) Entgegenhaltungen:
- EP-A2- 0 963 895
- WO-A1-91/04164
- US-A- 1 942 295

## Beschreibung

Die vorliegende Erfindung betrifft ein Fahrzeugtemperiersystem, umfassend einen Kältemittelkreislauf mit einem Kompressor, wenigstens einer von zu erwärmender Luft umströmbaren Kondensator-Wärmetauscheranordnung und wenigstens einer von zu kühlender Luft umströmbaren Verdampfer-Wärmetauscheranordnung gemäß dem Oberbegriff des Anspruchs 1. Ferner betrifft die vorliegende Erfindung ein Fahrzeug, insbesondere einen Omnibus, das mit einem derartigen Fahrzeugtemperiersystem ausgebildet ist.

Vor allem bei zur Personenbeförderung eingesetzten Fahrzeugen, wie z. B. Omnibussen, ist der thermisch zu konditionierende Innenraum vergleichsweise groß, so dass entsprechend dimensionierte Aggregate zur thermischen Konditionierung eingesetzt werden müssen. Dabei muss die Möglichkeit bestehen, den Fahrzeuginnenraum im Sommer zu kühlen, während beispielsweise im Winter der Fahrzeuginnenraum erwärmt werden muss. Die zur thermischen Konditionierung vorgesehenen Aggregate sollten unabhängig vom Fahrbetrieb eines derartigen Fahrzeugs betreibbar sein, so dass auch bei längeren Standphasen eine entsprechend den äußeren thermischen Bedingungen erforderliche Konditionierung erfolgen kann.

Zur Kühlung von Fahrzeuginnenräumen werden mit einem Kältemittelkreislauf arbeitende Klimaanlagen eingesetzt, deren Kondensator bzw. Kondensator-Wärmetauscheranordnung Wärme vom komprimierten Kältemittel zur Umgebung hin abgibt, während in dem Verdampfer bzw. der Verdampfer-Wärmetauscheranordnung der diese umströmenden Luft im Verdampfungsprozess des Kältemittels Wärme entzogen wird, so dass diese Luft gekühlt in einen Fahrzeuginnenraum eingeleitet werden kann. Soll eine derartige mit einem Kältemittelkreislauf arbeitende Klimaanlage auch im Heizbetrieb betrieben werden, so ist es im Allgemeinen erforderlich, den Kältemittelkreislauf umzukehren. Dies erfordert eine aufwendige Leitungsführung mit zahlreichen Ventilen. Eine alternative Möglichkeit zum Betreiben einer derartigen Klimaanlage sowohl im Kühlbetrieb, als auch im Heizbetrieb besteht in der Bereitstellung eines Zwischenwärmeträgerkreislaufs. Auch hier ist eine aufwendige Leitungsführung mit zusätzlichen Pumpen und Ventilen erforderlich.

Ein Fahrzeugtemperiersystem gemäß dem Oberbegriff des Anspruchs 1 ist aus der US 1 942 295 A bekannt. Bei diesem bekannten Temperiersystem ist einer Kondensator-Wärmetauscheranordnung eine erste Förderanordnung zugeordnet. Einer Verdampfer-Wärmetauscheranordnung ist eine zweite Förderanordnung zugeordnet. In einem Kühlbetriebsstellzustand der verschiedenen Klappenanordnungen fördert die der Kondensator-Wärmetauscheranordnung zugeordnete Förderanordnung Luft von der Außenumgebung durch die Kondensator-Wärmetauscheranordnung zu einem Außen-Abströmbereich, während die der Verdampfer-Wärmetauscheranordnung zugeordnete zweite Förderanordnung Luft aus einem Fahrzeuginnenraum durch die Verdampfer-Wärmetauscheranordnung zu einem Innen-Abströmbereich fördert. In einem Heizbetriebsstellzustand fördert die erste Förderanordnung Luft aus dem Fahrzeuginnenraum durch die Kondensator-Wärmetauscheranordnung zu dem Innen-Abströmbereich, während die zweite Förderanordnung Luft aus der Außenumgebung durch die Verdampfer-Wärmetauscheranordnung zu dem Innen-Abströmbereich fördert.

Es ist die Aufgabe der vorliegenden Erfindung, ein Temperiersystem vorzusehen, welches in einfacher Art und Weise sowohl für einen Kühlbetrieb, als auch für einen Heizbetrieb eingesetzt bzw. zwischen diesen Betriebsarten umgeschaltet werden kann.

Erfindungsgemäß wird diese Aufgabe gelöst durch ein Fahrzeugtemperiersystem, umfassend:
- einen Kältemittelkreislauf mit einem Kompressor, wenigstens einer von zu erwärmender Luft umströmbaren Kondensator-Wärmetauscheranordnung und wenigstens einer von zu kühlender Luft umströmbaren Verdampfer-Wärmetauscheranordnung,
- für die wenigstens eine Kondensator-Wärmetauscheranordnung:
   a) einen durch eine erste Klappenanordnung freigebbaren und absperrbaren ersten Zuströmbereich und einen durch die erste Klappenanordnung freigebbaren und absperrbaren zweiten Zuströmbereich,
   b) einen durch eine zweite Klappenanordnung freigebbaren und absperrbaren ersten Abströmbereich und einen durch die zweite Klappenanordnung freigebbaren und absperrbaren zweiten Abströmbereich,
- für die wenigstens eine Verdampfer-Wärmetauscheranordnung:
   c) einen durch eine dritte Klappenanordnung freigebbaren und absperrbaren dritten Zuströmbereich und einen durch die dritte Klappenanordnung freigebbaren und absperrbaren vierten Zuströmbereich,
   d) einen durch eine vierte Klappenanordnung freigebbaren und absperrbaren dritten Abströmbereich und einen durch die vierte Klappenanordnung freigebbaren und absperrbaren vierten Abströmbereich,
   wobei der zweite Abströmbereich und der vierte Abströmbereich zu einem Innen-Abströmbereich führen oder/und der erste Abströmbereich und der dritte Abströmbereich zu einem Außen-Abströmbereich führen.

Bei dem erfindungsgemäßen Temperiersystem wird durch das Bereitstellen der verschiedenen Klappenanordnungen die Möglichkeit geschaffen, die thermisch zu konditionierende Luft so zu leiten, dass sie wahlweise entweder mit der Kondensator-Wärmetauscheranordnung oder mit der Verdampfer-Wärmetauscheranordnung in thermische Wechselwirkung gebracht werden kann. Dies bedeutet, dass bei dem erfindungsgemäßen Aufbau eine entsprechend der erforderlichen thermischen Konditionierung einzustellende Strömungsrichtung für die thermisch zu konditionierende Luft vorgegeben wird, während der Kältemittelkreislauf an sich unabhängig von der Betriebsart immer in gleicher Art und Weise arbeitet. Dies führt zu einem einfachen Aufbau und ermöglicht eine spontane Umschaltung zwischen einem Kühlbetrieb und einem Heizbetrieb, da hierzu lediglich eine andere Luftströmungsführung erforderlich ist, jedoch keine Einwirkung auf den thermisch vergleichsweise trägen Kältemittelkreislauf.

Erfindungsgemäß ist ferner vorgesehen, dass dem Innen-Abströmbereich eine erste Förderanordnung zum Fördern von Luft aus dem Innen-Abströmbereich vorzugsweise zu einem Fahrzeuginnenraum zugeordnet ist. Je nach Stellung der verschiedenen Klappenanordnung wird dem Innen-Abströmbereich entweder gekühlte oder erwärmte Luft zugeführt, so dass diese dann ggf. in den Fahrzeuginnenraum weitergeleitet werden kann. Weiter ist dem Außen-Abströmbereich eine zweite Förderanordnung zum Fördern von Luft aus dem Außen-Abströmbereich vorzugsweise zu einer Außenumgebung zugeordnet. Über diesen Außen-Abströmbereich kann die Luft abströmen, welche im Heizbetrieb als Wärmequelle dient und im Kühlbetrieb zur Wärmeaufnahme von der zu kühlenden Luft bzw. von dem im Kältemittelkreislauf strömenden Kältemittel dient.

Die erste Förderanordnung kann wenigstens ein Radialgebläse, vorzugsweise Doppelradialgebläse, umfassen. Die zweite Förderanordnung kann wenigstens ein Axialgebläse umfassen.

Bei dem erfindungsgemäßen Temperiersystem kann ferner vorgesehen sein, dass der erste Zuströmbereich und der dritte Zuströmbereich zur Aufnahme von Luft aus einer Außenumgebung vorgesehen sind, und dass der zweite Zuströmbereich und der vierte Zuströmbereich zur Aufnahme von Luft aus einem Fahrzeuginnenraum vorgesehen sind. Sowohl der Kondensator-Wärmetauscheranordnung als auch der Verdampfer-Wärmetauscheranordnung sind somit jeweils zwei Zuströmbereiche zugeordnet, so dass diese jeweils beispielsweise von aus einem Fahrzeuginnenraum abgezogener Luft oder aus der Außenumgebung herangeführter Luft umströmt werden können.

Eine kompakte Bauart des erfindungsgemäßen Temperiersystems kann beispielsweise dadurch erreicht werden, dass wenigstens eine Kondensator-Wärmetauscheranordnung und wenigstens eine Verdampfer-Wärmetauscheranordnung einander bezüglich des diesen zugeordneten Innen-Abströmbereichs oder/und Außen-Abströmbereichs gegenüberliegend angeordnet sind.

Um mit dem erfindungsgemäßen Fahrzeugtemperiersystem für den Kühlbetrieb bzw. den Heizbetrieb in einfacher Weise die verschiedenen Luftströmungen einrichten zu können, wird vorgeschlagen, dass die erste Klappenanordnung, die zweite Klappenanordnung, die dritte Klappenanordnung und die vierte Klappenanordnung in einen Kühlbetriebsstellzustand stellbar sind, wobei im Kühlbetriebsstellzustand:
- die erste Klappenanordnung den ersten Zuströmbereich freigibt und den zweiten Zuströmbereich absperrt,
- die zweite Klappenanordnung den ersten Abströmbereich freigibt und den zweiten Abströmbereich absperrt,
- die dritte Klappenanordnung den dritten Zuströmbereich absperrt und den vierten Zuströmbereich freigibt,
- die vierte Klappenanordnung den dritten Abströmbereich absperrt und den vierten Abströmbereich freigibt,
oder/und in einen Heizbetriebsstellzustand stellbar sind, wobei im Heizbetriebsstellzustand :
- die erste Klappenanordnung den ersten Zuströmbereich absperrt und den zweiten Zuströmbereich freigibt,
- die zweite Klappenanordnung den ersten Abströmbereich absperrt und den zweiten Abströmbereich freigibt,
- die dritte Klappenanordnung den dritten Zuströmbereich freigibt und den vierten Zuströmbereich absperrt,
- die vierte Klappenanordnung den dritten Abströmbereich freigibt und den vierten Abströmbereich absperrt.

Bei einer baulich besonders einfach zu realisierenden Ausgestaltungsvariante kann vorgesehen sein, dass wenigstens eine Klappenanordnung, vorzugsweise die erste Klappenanordnung oder/und die dritte Klappenanordnung, als Einzelklappenanordnung ausgebildet ist, wobei in einem ersten Stellzustand der Einzelklappenanordnung die Klappe der Einzelklappenanordnung einen der Einzelklappenanordnung zugeordneten Zu- oder Abströmbereich freigibt und einen anderen der Einzelklappenanordnung zugeordneten Zu- oder Abströmbereich absperrt und wobei in einem zweiten Stellzustand der Einzelklappenanordnung die Klappe der Einzelklappenanordnung den einen Zu- oder Abströmbereich absperrt und den anderen Zu- oder Abströmbereich freigibt. Alternativ oder zusätzlich kann vorgesehen sein, dass wenigstens eine Klappenanordnung, vorzugsweise die zweite Klappenanordnung oder/und die vierte Klappenanordnung, als Doppelklappenanordnung ausgebildet ist, wobei in einem ersten Stellzustand der Doppelklappanordnung eine erste Klappe der Doppelklappenanordnung einen der Doppelklappenanordnung zugeordneten Zu- oder Abströmbereich freigibt und eine zweite Klappe der Doppelklappenanordnung einen anderen der Doppelklappenanordnung zugeordneten Zu- oder Abströmbereich absperrt und wobei in einem zweiten Stellzustand der Doppelklappenanordnung die erste Klappe der Doppelklappenanordnung den einen Zu- oder Abströmbereich absperrt und die zweite Klappe der Doppelklappenanordnung den anderen Zu- oder Abströmbereich freigibt. Um in der Luftströmungsführung eine größtmögliche Variabilität vorsehen zu können, wird weiter vorgeschlagen, dass jeder Klappenanordnung, vorzugsweise jeder Klappe jeder Klappenanordnung, ein eigenständiger Klappenantrieb zugeordnet ist.

Insbesondere bei Einsatz des erfindungsgemäßen Fahrzeugtemperiersystems bei zur Personenbeförderung eingesetzten Fahrzeugen, wie z. B. Omnibussen, kann zur Bereitstellung einer erhöhten Leistungsfähigkeit vorgesehen sein, dass der Kältemittelkreislauf wenigstens zwei Kondensator-Wärmetauscheranordnungen und wenigstens zwei Verdampfer-Wärmetauscheranordnungen umfasst, wobei jedem Paar von Kondensator-Wärmetauscheranordnung und Verdampfer-Wärmetauscheranordnung jeweils ein Innen-Abströmbereich oder/und ein Außen-Abströmbereich zugeordnet ist.

Bei derartiger Ausgestaltung mit mehreren Kondensator-Wärmetauscheranordnungen bzw. Verdampfer-Wärmetauscheranordnungen kann ferner vorgesehen sein, dass wenigstens zwei Kondensator-Wärmetauscheranordnungen zueinander parallel geschaltet sind, oder/und dass wenigstens zwei Verdampfer-Wärmetauscheranordnungen zueinander parallel geschaltet sind, oder/und dass bezüglich der Innen-Abströmbereiche oder/und Außen-Abströmbereiche bei jedem Paar von Kondensator-Wärmetauscheranordnung und Verdampfer-Wärmetauscheranordnung diese einander gegenüberliegend angeordnet sind und die Kondensator-Wärmetauscheranordnung eines Paares neben der Verdampfer-Wärmetauscheranordnung des anderen Paares angeordnet ist.

Die vorliegende Erfindung betrifft ferner ein Fahrzeug, insbesondere Omnibus, umfassend einen Fahrzeuginnenraum und ein erfindungsgemäß aufgebautes Fahrzeugtemperiersystem zum Speisen thermisch konditionierter Luft in den Fahrzeuginnenraum.

Um dabei eine die thermische Konditionierung unterstützende bzw. zulassende Strömungsführung bereitstellen zu können, wird vorgeschlagen, dass der erste Zuströmbereich und der dritte Zuströmbereich zur Aufnahme von Luft aus einer Außenumgebung angeordnet sind, und dass der zweite Zuströmbereich und der vierte Zuströmbereich zur Aufnahme von Luft aus dem Fahrzeuginnenraum angeordnet sind.

Zur Einleitung der thermisch konditionierten Luft in den Fahrzeuginnenraum wird vorgeschlagen, dass wenigstens ein über wenigstens einen Innen-Abströmbereich mit Luft gespeister Luftverteilungskanal vorgesehen ist. Um dabei in verschiedenen Bereichen des Fahrzeuginnenraums verschiedene Klimazonen generieren zu können, wird weiter vorgeschlagen, dass ein erster Luftverteilungskanal über einen ersten Innen-Abströmbereich mit Luft gespeist ist und ein zweiter Luftverteilungskanal über einen zweiten Innen-Abströmbereich mit Luft gespeist ist, wobei der erste Luftverteilungskanal vom zweiten Luftverteilungskanal getrennt oder trennbar ist.

Die vorliegende Erfindung wird nachfolgend mit Bezug auf die beiliegenden Figuren detailliert beschrieben. Es zeigt:
- Fig. 1: in perspektivischer Ansicht ein Fahrzeugtemperiersystem;
- Fig. 2: in vereinfachter Darstellung einen Omnibus mit einem am Dach desselben vorgesehenen Fahrzeugtemperiersystem gemäß Fig. 1;
- Fig. 3: einen schaltbildartigen Aufbau des Fahrzeugtemperiersystems;
- Fig. 4: eine der Fig. 3 entsprechende Darstellung einer alternativen Ausgestaltung des Fahrzeugtemperiersystems;
- Fig. 5: eine Prinzip-Schnittdarstellung des Fahrzeugtemperiersystems in einem Kühlbetrieb;
- Fig. 6: eine der Fig. 5 entsprechende Darstellung im Heizbetrieb des Fahrzeugtemperiersystems;
- Fig. 7: eine der Fig. 1 entsprechende Ansicht eines alternativ aufgebauten Fahrzeugtemperiersystems;
- Fig. 8: in vereinfachter Darstellung ein Omnibus mit einem am Dach desselben vorgesehenen Fahrzeugtemperiersystem gemäß Fig. 7.

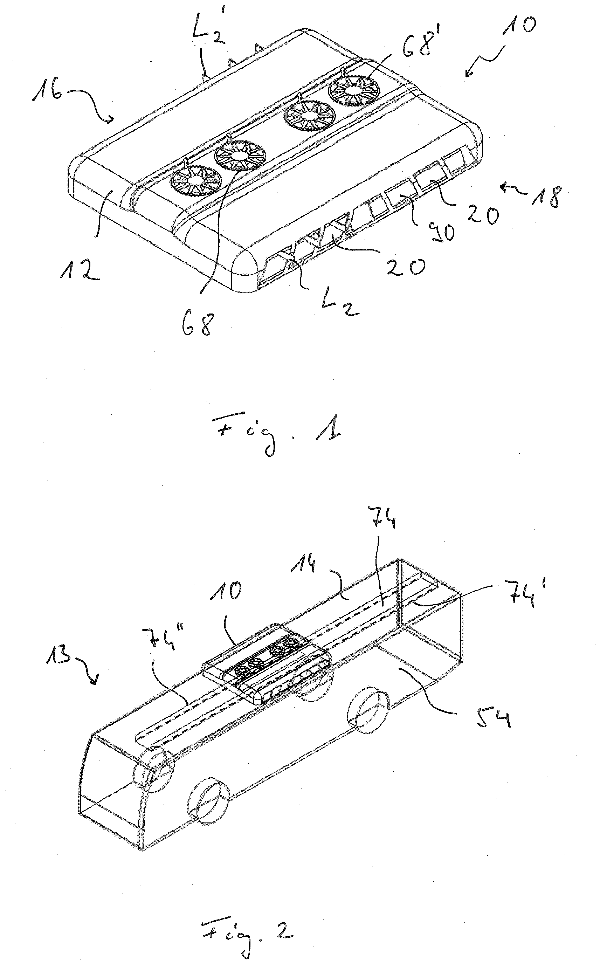

In den Fig. 1 und 2 ist ein Fahrzeugtemperiersystem allgemein mit 10 bezeichnet. Das Fahrzeugtemperiersystem 10 kann in besonders vorteilhafter Weise in Verbindung mit einem Omnibus 13 oder sonstigen zur Personenbeförderung einzusetzenden Fahrzeugen genutzt werden, da es in der Lage ist, vergleichsweise große Luftmengen thermisch zu konditionieren und somit vergleichsweise große Fahrzeuginnenräume gewünschtenfalls zu kühlen oder zu heizen.

Das Fahrzeugtemperiersystem 10 umfasst ein Gehäuse 12, mit welchem dieses beispielsweise auf dem Dach 14 des Omnibusses 13 angebracht werden kann. In jeweiligen Seitenbereichen 16, 18, Seite bezogen auf eine jeweilige seitliche Positonierung an einem Fahrzeug, weist das Gehäuse 12 eine Vielzahl von Öffnungen 20 auf, über welche Luft von einer Außenumgebung in das Gehäuse 12 eintreten kann. Dies wird nachfolgend noch detailliert beschrieben.

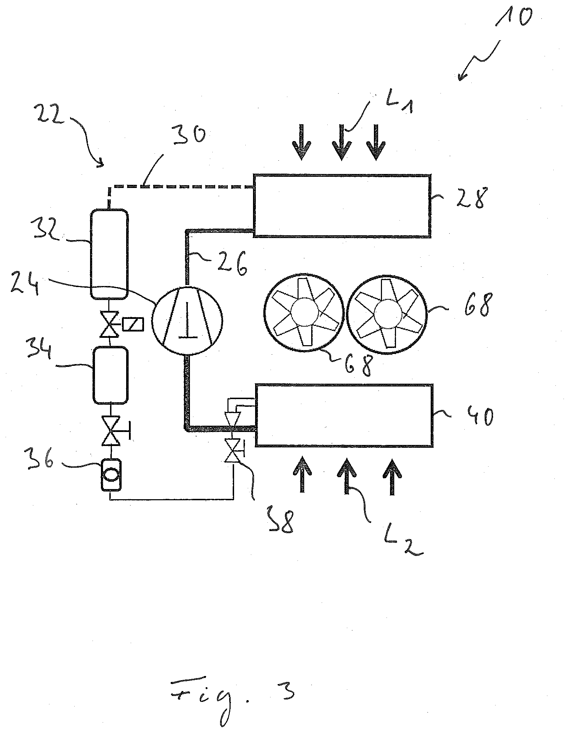

Die Fig. 3 zeigt in prinzipartiger Darstellung ein Beispiel eines allgemein mit 22 bezeichneten Kältemittelkreislaufs des Fahrzeugtemperiersystems 10. Der Kältemittelkreislauf 22 umfasst einen Kompressor 24, der über einen Leitungsbereich 26 komprimiertes Kältemittel in Richtung zu einem Kondensator bzw. zu einer Kondensator-Wärmetauscheranordnung 28 fördert. Im Kondensationsprozess frei werdende Wärme wird an der Kondensator-Wärmetauscheranordnung 28 von einem diese umströmenden ersten Luftstrom L1 aufgenommen, so dass der erste Luftstrom L₁ nach Umströmen der Kondensator-Wärmetauscheranordnung 28 erwärmt ist.

Über einen Leitungsbereich 30 strömt das komprimierte bzw. verflüssigte Kältemittel 30 zu einem Sammelbehälter 32 bzw. zu einem Trockner 34 und einem Schauglas 36 und gelangt dann zu einem Expansionsventil 38. Über das Expansionsventil 38 tritt das Kältemittel in einen Verdampfer bzw. eine Verdampfer-Wärmetauscheranordnung 40 ein. Ein zweiter Luftstrom L₂ umströmt die Verdampfer-Wärmetauscheranordnung 40 und gibt im Verdampfungsprozess des Kältemittels Wärme an die Verdampfer-Wärmetauscheranordnung 40 ab, so dass der zweite Luftstrom L₂ nach Umströmen der Verdampfer-Wärmetauscheranordnung 40 gekühlt ist. Das die Verdampfer-Wärmetauscheranordnung 40 in gasförmigem Aggregatzustand verlassende Kältemittel gelangt über nur einen Leitungsbereich 42 zurück zum Kompressor 24. Wie im Folgenden beschrieben wird, kann durch wahlweises Führen der Luftströme L₁ bzw. L₂ zur Kondensator-Wärmetauscheranordnung 28 oder zur Verdampfer-Wärmetauscheranordnung 40 dafür gesorgt werden, dass ein Fahrzeuginnenraum bzw. die darin enthaltene Luft entweder gekühlt oder erwärmt wird.

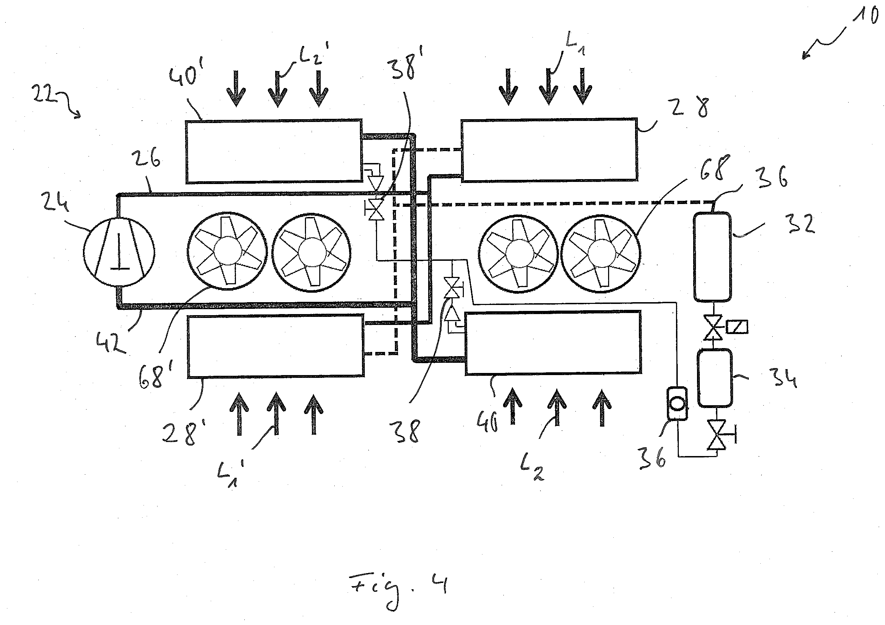

Eine alternative Ausgestaltung des Kältemittelkreislaufs 22 ist in Fig. 4 dargestellt. Der Aufbau entspricht grundsätzlich dem vorangehend mit Bezug auf die Fig. 3 beschriebenen Aufbau des Kältemittelkreislaufs 22. Im Unterschied zu diesem sind bei der in Fig. 4 dargestellten Ausgestaltungsvariante jedoch zwei Kondensator-Wärmetauscheranordnungen 28, 28' und entsprechend auch zwei Verdampfer-Wärmetauscheranordnungen 40, 40', vorgesehen. Die beiden Kondensator-Wärmetauscheranordnungen 28, 28' sind, ebenso wie die beiden Verdampfer-Wärmetauscheranordnungen 40, 40', zueinander parallel geschaltet, was durch entsprechende Verzweigung des Leitungsbereichs 26 vom Kompressor 24 weg bzw. des Leitungsbereichs 42 zum Kompressor 24 zurück realisiert ist. Die Kondensator-Wärmetauscheranordnung 28 und die Verdampfer-Wärmetauscheranordnung 40 sind einander paarweise zugeordnet und einander gegenüberliegend angeordnet, ebenso wie die Kondensator-Wärmetauscheranordnung 28' und die Verdampfer-Wärmetauscheranordnung 40'. Diese beiden Paare jeweils mit einer Kondensator-Wärmetauscheranordnung 28 bzw. 28' und einer Verdampfer-Wärmetauscheranordnung 40 bzw. 40' arbeiten zur Konditionierung jeweiliger Luftströme L₁, L₂ bzw. L1', L₂' voneinander unabhängig, so dass, wie im Folgenden noch beschrieben, grundsätzlich die Erzeugung unterschiedlicher Klimazonen in einem Fahrzeuginnenraum möglich ist.

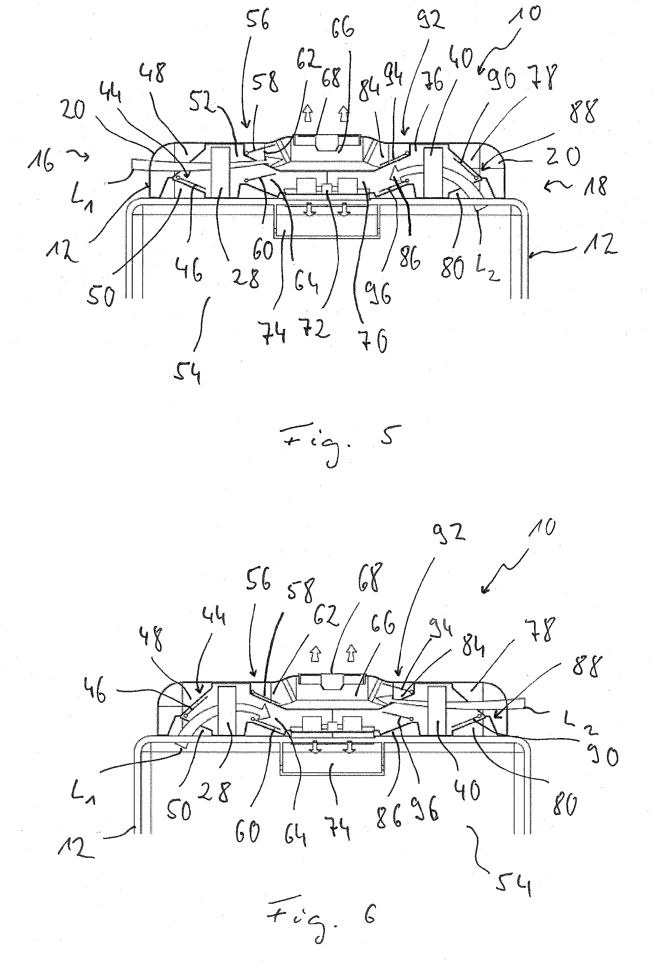

In den Fig. 5 und 6 ist für einen Kühlbetrieb einerseits und einen Heizbetrieb andererseits die Funktionsweise bzw. die Luftströmungsführung für ein Paar aus Kondensator-Wärmetauscheranordnung und Verdampfer-Wärmetauscheranordnung dargestellt. Hier ist beispielsweise auf das auch in Fig. 3 dargestellte Paar mit der Kondensataor-Wärmetauscheranordnung 28 und der Verdampfer-Wärmetauscheranordnung 40 Bezug genommen. Es ist noch einmal darauf hinzuweisen, dass in entsprechender Art und Weise auch das andere Paar betrieben werden kann. Hierzu ist noch zu betonen, dass, wie die Fig. 4 dies veranschaulicht, bei den paarweise einander gegenüberliegenden Wärmetauscheranordnungen die Verdampfer-Wärmetauscheranrodnung 40' neben der Kondensator-Wärmetauscheranordnung 28 des anderen Paares liegt, während die Verdampfer-Wärmetauscheranordnung 40 neben der Kondensator-Wärmetauscheranordnung 28' liegt. Insbesondere ist die Zuordnung dabei derart, dass die Wärmetauscheranordnungen 40', 28 an einer Seite, beispielsweise der Seite 16 des Gehäuses 12 bzw. der des Temperiersystems 10 liegen, während die beiden anderen Wärmetauscheranordnungen 28', 40 an der anderen Seite, beispielsweise der Seite 18, liegen. Dies führt zu einer sehr gleichmäßigen Konditionierung eines Fahrzeuginnenraums.

Die Fig. 5 zeigt den im Gehäuse 12 vorgesehenen Aufbau des Temperiersystems 10 mit der Kondensator-Wärmetauscheranordnung 28 und der Verdampfer-Wärmetauscheranordnung 40. Der Kondensator-Wärmetauscheranordnung 28 ist eine erste Klappenanordnung 44 zugeordnet. Die erste Klappenanordnung 44 ist als Einzelklappenanordnung ausgebildet und umfasst eine Klappe 46, durch die wahlweise ein erster Zuströmbereich 48 sowie ein zweiter Zuströmbereich 50 zu einem Innenraumbereich 52 abgesperrt bzw. freigegeben werden kann, in welchem Innenraumbereich 52 die Kondensator-Wärmetauscheranordnung 28 vorgesehen ist. Dabei ist die Anordnung derart, dass der erste Zuströmbereich 46 über eine der Öffnungen 20 im Gehäuse 12 zur Außenumgebung hin offen ist bzw. mit der Außenumgebung in Verbindung steht, während der zweite Zuströmbereich 50 zu einem Fahrzeuginnenraum 54 offen ist bzw. damit in Verbindung steht.

Der Kondensator-Wärmetauscheranordnung 28 ist ferner eine zweite Klappenanordnung 56 zugeordnet, welche als Doppelklappenanordnung mit zwei Klappen 58, 60 ausgebildet ist. Durch die erste Klappe 58 der zweiten Klappenanordnung 56 ist ein erster Absrömbereich 62 wahlweise freigebbar bzw. absperrbar. Durch die zweite Klappe 60 der zweiten Klappenanordnung 56 ist ein zweiter Abströmbereich 64 wahlweise absperrbar bzw. freigebbar. Dabei führt der erste Abströmbereich zu einem Außen-Abströmbereich 66, von welchem, beispielsweise gefördert durch einen bzw. mehrere Axiallüfter 68, vorzugsweise zwei derartige Axiallüfter 68, in den Außen-Abströmbereich 66 strömende Luft zur Außenumgebung abgegeben werden kann. Der zweite Abströmbereich 64 führt zu in einem Innen-Abströmbereich 70. Gefördert beispielsweise durch ein- oder mehrere Doppelradialgebläse 72, vorzugsweise beispielsweise drei derartige Doppelradialgebläse 72, wird die Luft aus dem Innen-Abströmbereich 70 in einen nachfolgend noch erläuterten Luftverteilungskanal 74 und über diesen in den Fahrzeuginnenraum 54 geleitet.

An der bezüglich des Außen-Abströmbereichs 66 sowie des Innen-Abströmbereichs 70 dem ersten Innenraumbereich 52 gegenüberliegenden Seite ist ein zweiter Innenraumbereich 76 vorgesehen, in welchem die Verdampfer-Wärmetauscheranordnung 40 angeordnet ist. Ein dritter Zuströmbereich 78 und ein vierter Zuströmbereich 80 führen zu dem zweiten Innenraumbereich 76. Ein dritter Abströmbereich 82 und ein vierter Abströmbereich 84 führen von dem zweiten Innenraumbereich 76 weg zum Außen-Abströmbereich 66 bzw. zum Innen-Abströmbereich 70. Eine dritte Klappenanordnung 88, diese ausgebildet als Einzelklappenanordnung mit einer Klappe 90, ist dazu vorgesehen, wahlweise den dritten Zuströmbereich 78 bzw. den vierten Zuströmbereich 80 freizugeben bzw. abzusperren. Dabei steht der dritte Zuströmbereich 78 beispielsweise über eine der Öffnungen 20 im Gehäuse 12 in Verbindung mit der Außenumgebung, während der vierte Zuströmbereich 80 in Verbindung mit dem Fahrzeuginnenraum 54 steht. Eine vierte Klappenanordnung 92, diese ausgebildet als Doppelklappenanordnung mit zwei Klappen 94, 96, kann mit ihrer Klappe 94 den dritten Abströmbereich 84 vom zweiten Innenraumbereich 76 zum Außen-Abströmbereich 66 wahlweise freigeben bzw. absperren und kann mit ihrer zweiten Klappe 96 den vierten Abströmbereich 86 vom zweiten Innenraumbereich 76 zum Innen-Abströmbereich 70 wahlweise freigeben oder absperren.

Es sei hier darauf hingewiesen, dass den verschiedenen Klappen der Klappenanordnungen 44, 56, 88, 92 jeweils separate, beispielsweise mit Elektromotoren, aufgebaute Antriebe zugeordnet sein können, um jede dieser Klappen unabhängig von der Stellung bzw. Ansteuerung der anderen Klappen eigenständig verstellen zu können. Sofern vorteilhaft oder erforderlich, können beispielsweise aber auch die paarweise einander zugeordneten Klappen jeweiliger Doppelklappenanordnungen gemeinsam angesteuert bzw. durch einen gemeinsamen Antrieb verstellt werden.

In Fig. 5 ist das Fahrzeugtemperiersystem 10 in einem Kühlbetriebszustand, in welchem Luft in den Fahrzeuginnenraum 54 durch die Verdampfer-Wärmetauscheranordnung 40 gekühlt eingeleitet werden kann. Um dies zu erreichen, ist die Klappe 46 der ersten Klappenanordnung 44 so gestellt, dass sie den ersten Zuströmbereich 48 freigibt und den zweiten Zuströmbereich 50 im Wesentlichen absperrt. Somit wird der vom Außenumgebungsbereich heranströmende Luftstrom L₁ in den ersten Innenraumbereich 52 und somit in thermischer Wechselwirkung mit der Kondensator-Wärmetauscheranordnung 28 gebracht. Die zweite Klappenanordnung 56 ist derart gestellt, dass ihre erste Klappe 58 den ersten Abströmbereich 62 freigibt, während die zweite Klappe 60 den zweiten Abströmbereich 64 im Wesentlichen absperrt. Dies hat zur Folge, dass der Luftstrom L₁ nach dem Umströmen der Kondensator-Wärmetauscheranordnung 28 in den Außen-Abströmbereich 66 gelangt und dort unter der Förderwirkung der Axiallüfter 68 abgezogen bzw. erwärmt wieder in die Außenumgebung strömt.

Die Klappe 90 der dritten Klappenanordnung 88 ist derart gestellt, dass sie den vierten Zuströmbereich 80 freigibt und den dritten Zuströmbereich 78 im Wesentlichen absperrt, so dass der zu der Verdampfer-Wärmetauscheranordnung 40 geführte Luftstrom L₂ aus dem Fahrzeuginnenraum 54 heranströmt. Die erste Klappe 94 der vierten Klappenanordnung 92 ist derart gestellt, dass sie den dritten Abströmbereich 84 im Wesentlichen absperrt, während die zweite Klappe 96 der vierten Klappenanordnung 92 so gestellt ist, dass sie den vierten Abströmbereich 86 im Wesentlichen freigibt. Dies hat zur Folge, dass, nachdem der Luftstrom L₂ in thermische Wechselwirkung mit der Verdampfer-Wärmetauscheranordnung 40 gebracht worden ist und dort Wärme abgegeben hat, also gekühlt wurde, dieser in den Innen-Abströmbereich 70 gelangt und durch die Doppelradialgebläse 72 in den Luftverteilungskanal 74 und über diesen in den Fahrzeuginnenraum 54 gefördert wird.

In dem in Fig. 5 dargestellten Kühlbetriebsstellzustand der verschiedenen Klappenanordnungen 44, 56, 88, 92 arbeitet also der Kältemittelkreislauf 22 des Fahrzeugtemperiersystems 10 als Klimaanlage, durch welche der aus dem Fahrzeuginnenraum 54 abgezogene Luftstrom L₂ Wärme an den Kältemittelkreislauf 22 abgibt und somit gekühlt wieder in den Fahrzeuginnenraum 54 zurückgespeist wird, während der aus der Außenumgebung aufgenommene Luftstrom L₁ Wärme vom Kältemittelkreislauf 22 aufnimmt und entsprechend erwärmt wieder zur Außenumgebung abgegeben wird.

Die Fig. 6 zeigt einen Heizbetriebszustand des Fahrzeugtemperiersystems 10 bzw. einen Heizbetriebsstellzustand der verschiedenen Klappenanordnungen 44, 56, 88, 92. Dabei ist die Klappe 46 der ersten Klappenanordnung 44 so gestellt, dass sie den ersten Zuströmbereich 48 im Wesentlichen absperrt und den zweiten Zuströmbereich 50 freigibt, so dass der zur Kondensator-Wärmetauscheranordnung 28 geführte Luftstrom L₁ aus dem Fahrzeuginnenraum 54 abgezogen wird. Die erste Klappe 58 der zweiten Klappenanordnung 56 sperrt den ersten Abströmbereich 62 im Wesentlichen ab, während die zweite Klappe 60 der zweiten Klappenanordnung 52 den zweiten Abströmbereich 64 freigibt. Nach thermischer Wechselwirkung mit der Kondensator-Wärmetauscheranordnung 28, also Erwärmung des Luftstroms L₁, gelangt dieser in den Innen-Abströmbereich 70 und über den Luftverteilungskanal 74 zurück in den Fahrzeuginnenraum 54.

Die Klappe 90 der dritten Klappenanordnung 88 ist so gestellt, dass sie den vierten Zuströmbereich 80 im Wesentlichen absperrt, während der dritte Zuströmbereich 78 freigegeben ist, so dass von der Außenumgebung aufgenommene Luft L₂ unter der Förderwirkung der Axiallüfter 68 in Richtung zur Verdampfer-Wärmetauscheranordnung 40 gelangt. Die erste Klappe 94 der vierten Klappenanordnung 92 ist so gestellt, dass sie den dritten Abströmbereich 84 freigibt, während die zweite Klappe 96 der vierten Klappenanordnung 92 so gestellt ist, dass sie den vierten Abströmbereich 86 im Wesentlichen absperrt. Der von der Außenumgebung aufgenommene und durch thermische Wechselwirkung mit der Verdampfer-Wärmetauscheranordnung gekühlte Luftstrom L₂ gelangt somit in den Außen-Abströmbereich 66 und unter der Förderwirkung der Axiallüfter 68 wieder zur Außenumgebung zurück. In dem in Fig. 6 dargestellten Heizbetriebszustand wird also die dem Luftstrom L₂ an der Verdampfer-Wärmetauscheranordnung 40 entzogene Wärme im Bereich der Kondensator-Wärmetauscheranordnung 28 auf den Luftstrom L₁ übertragen. Dies bedeutet, dass in diesem Heizbetriebszusand des Fahrzeugtemperiersystems 10 nach Art einer Wärmepumpe betrieben wird.

Ist, wie die Fig. 4 dies darstellt, der Kältemmittelkreislauf 22 jeweils mit zwei bzw. mehreren Paaren von Kondensator-Wärmetauscheranordnung und Verdampfer-Wärmetauscheranordnung aufgebaut, so kann jedes derartige Paar durch die diesen zugeordneten Klappenanordnungen unabhängig von dem bzw. den anderen Paaren entweder im Heizbetriebszustand oder im Kühlbetriebszustand betrieben werden. Zu diesem Zweck ist es vorteilhaft bzw. erforderlich, die den jeweiligen Paaren zugeordneten Innen-Abströmbereiche und Außen-Abströmbereiche zu den jeweiligen anderen Paaren zugeordneten Innen-Abströmbereichen bzw. Außen-Abströmbereichen abzutrennen. Ebenso ist es erforderlich bzw. vorteilhaft, dafür zu sorgen, dass die einem jeweiligen Paar zugeordneten Klappenanordnungen bzw. deren Klappen auch eigenständig verstellt werden können. Somit kann beispielsweise dafür gesorgt werden, dass bei dem in Fig. 4 dargestellten Ausgestaltungsbeispiel des Kältemittelkreislaufs 22 eines der Paare von Kondensator-Wärmetauscheranordnung und Verdampfer-Wärmetauscheranordnung im Heizbetriebszustand betrieben wird, während das andere Paar durch jeweilige andere Stellung der Klappenanordnung im Kühlbetriebszustand betrieben wird. Dies erfordert keinerlei Einwirkung auf den Kältemittelkreislauf bzw. die Kältemittelzirkulation selbst, da, unabhängig davon, ob im Kühlbetriebszustand oder im Heizbetriebszustand gearbeitet wird, die Funktionalitäten der Verdampfer-Wärmetauscheranordnungen einerseits und der Kondensator-Wärmetauscheranordnungen andererseits beibehalten bleiben.

Die Fig. 2 zeigt die Zuordnung des in Fig. 1 dargestellten Fahrzeugtemperiersystems 10 zu einem Omnibus 13, wobei hier das Fahrzeugtemperiersystem 10 beispielsweise mit dem in Fig. 4 dargestellten Kältemittelkreislauf 22 mit zwei Paaren von Kondensator-Wärmetauscheranordnung und Verdampfer-Wärmetauscheranordnung aufgebaut ist. Das Fahrzeugtemperiersystem 10 ist näherungsweise mittig am Omnibus 13 bzw. dessen Dach 14 positioniert und somit auch mittig, mittig bezüglich einer Längserstreckungsrichtung in Fahrzeuglängsrichtung, bezüglich des Luftverteilungskanals 74. Ist der Luftverteilungskanal 74 als ein durchgehender Kanal ausgebildet, so werden vorteilhafterweise die beiden Paare von Kondensator-Wärmetauscheranordnung und Verdampfer-Wärmetauscheranordnung durch jeweilige Stellung der zugeordneten Klappenanordnungen in der gleichen Betriebsart, also entweder Heizbetrieb, oder Kühlbetrieb betrieben. Grundsätzlich könnte der Luftverteilungskanal 74 jedoch unterteilt sein in einen ersten Luftverteilungskanal 74', der vom Fahrzeugtemperiersystem 10 zum hinteren Bereich des Fahrzeuginnenraums 54 führt, und einen zweiten Luftverteilungskanal 74", der vom Fahrzeugtemperiersystem 10 zum vorderen Bereich des Fahrzeuginnenraums 54 führt. Dabei könnte beispielsweise weiter vorgesehen sein, dass die Kondensator-Wärmetauscheranordnung 28 und die Verdampfer-Wärmetauscheranordnung 40 mit dem ersten Luftverteilungskanal 74' zusammenwirken, während die Kondensator-Wärmetauscheranordnung 28' und die Verdampfer-Wärmetauscheranordnung 40' mit dem zweiten Luftverteilungskanal 74" zusammenarbeiten. Beispielsweise können diese beiden Luftverteilungskanäle 74' und 74" grundsätzlich voneinander getrennt sein oder durch eine entsprechend ansteuerbare Klappenanordnung voneinander getrennt werden. Somit besteht durch die voneinander unabhängige Betreibbarkeit der beiden Paare von Wärmetauscheranordnungen im Heizbetrieb oder im Kühlbetrieb die Möglichkeit, beispielsweise den hinteren Bereich des Fahrzeuginnenraums 54 zu kühlen, während der vordere Bereich erwärmt wird, oder umgekehrt. Werden beide Paare von Wärmetauscheranordnungen in der gleichen Betriebsart betrieben, kann der gesamte Innenraum 54 entweder gekühlt oder erwärmt werden.

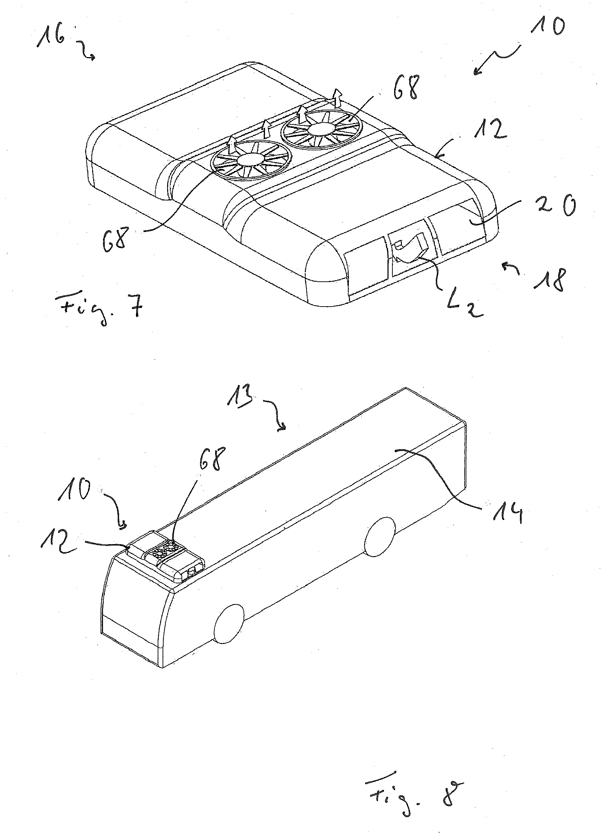

Die Fig. 7 und 8 zeigen ein alternativ aufgebautes Fahrzeugtemperiersystem 10 bzw. einen damit ausgestatteten Omnibus 13. Das Fahrzeugtemperiersystem 10 der Fig. 7 und 8 ist derart aufgebaut, dass es einen Kältemittelkreislauf 22 gemäß Fig. 3 aufweist, also eine Kondensator-Wärmetauscheranordnung 28 und eine Verdampfer-Wärmetauscheranordnung 40 aufweist. Diesem Paar von Wärmetauscheranordnungen sind dann, so wie vorangehend beschrieben, Außen- und Innen-Abströmbereiche zugeordnet, über welche thermisch behandelte Luft entweder nach außen abgegeben werden kann, oder in den Fahrzeuginnenraum eingeleitet werden kann. Man erkennt, dass aufgrund des Vorsehens nur eines Paares von Wärmetauscheranordnungen das Fahrzeugtemperiersystem 10 eine kompaktere Bauart aufweist. Diese Ausgestaltung kann abhängig vom Volumen des zu temperierenden Fahrzeuginnenraums gewählt werden.

Man erkennt in Fig. 8 weiter, dass das Fahrzeugtemperiersystem 10 beispielsweise im Frontbereich des Omnibusses 13 bzw. des Dachs 14 desselben angeordnet ist und über einen in Fig. 8 nicht erkennbaren Luftverteilungskanal die über den Innen-Abströmbereich abgegebene Luft im Fahrzeuginnenraum verteilt. Selbstverständlich könnte dieses Fahrzeugtemperiersystem 10, ebenso wie das auch in Fig. 2 dargestellte Fahrzeugtemperiersystem 10, auch an anderer Positionierung am Omnibus 13, beispielsweise im Heckbereich des Dachs 14, angeordnet werden. Auch ist darauf hinzuweisen, dass in Zuordnung zu den jeweiligen Paaren von Wärmetauscheranordnungen auch jeweils eine entsprechend der zu fördernden Luftmenge angepasste Anzahl an Gebläsen vorgesehen sein kann. Insbesondere bei geringerer zu fördernder Luftmenge könnte beispielsweise auch nur ein Axiallüfter bzw. ein Radialgebläse oder Doppelradialgebläse vorgesehen sein.

Mit dem vorangehend beschriebenen Aufbau eines Fahrzeugtemperiersystems wird es möglich, in einfacher und auch während des Betriebs schnell umschaltbarer Art und Weise einen Fahrzeuginnenraum eines Fahrzeugs in der gewünschten Art und Weise thermisch zu konditionieren, also zu kühlen oder zu erwärmen. Eine Einwirkung auf den Kältemittelkreislauf bzw. die Kältemittelströmungsrichtung selbst ist nicht erforderlich, da die Einstellung einer bestimmten Betriebsart allein durch die Luftströmungsführung zu bzw. von den verschiedenen Wärmetauscheranordnungen erfolgt. Selbstverständlich ist es dabei möglich, das Fahrzeugtemperiersystem auch in anderen Betriebsarten, beispielsweise einem Abtaubetrieb, zu betreiben. Dabei werden die Verdampfer-Wärmetauscheranordnungen durch entsprechende Ansteuerung der Klappenanordnungen von der Außenumgebung abgeschlossen und das auftretende Tauwasser an der Verdampfer-Wärmetauscheranordnung in einer Tropfwanne aufgefangen. Grundsätzlich kann auch ein Abtauvorgang unter Einsatz eines Heißgassystems oder eines elektrischen Heizsystems realisiert werden. Die zur Erwärmung des Verdampfers erforderlichen Heizspiralen können beispielsweise in der Verrohrung der Verdampfer-Wärmetauscheranordnung mit vorgesehen sein.

Ferner kann das erfindungsgemäße Temperiersystem auch derart betrieben werden, dass sowohl im Heizbetrieb, als auch im Kühlbetrieb der aus dem Fahrzeuginnenraum abgezogenen und in diesen zurückgespeisten Luft Frischluft beigemengt wird. Dies kann insbesondere durch entsprechende Ansteuerung der ersten Klappenanordnung bzw. der dritten Klappenanordnung erfolgen, so dass beispielsweise der erste Zuströmbereich bzw. der dritte Zuströmbereich im jeweiligen Betriebszustand nicht vollständig abgesperrt ist. Auch die Einleitung von Frischluft in den Fahrzeuginnenraum, bei gleichzeitigem Fördern von Luft aus dem Fahrzeuginnenraum zur Außenumgebung ist es möglich, gekoppelt mit der Möglichkeit, die in den Fahrzeuginnenraum zu leitende Luft zu kühlen oder zu erwärmen.

Abschließend sei darauf hingewiesen, dass die vorangehend beschriebene und in den Figuren dargestellte Ausgestaltungsvariante, bei welcher jeweils in Zuordnung zu einem Paar aus Verdampfer-Wärmetauscheranordnung und Kondensator-Wärmetauscheranordnung ein Außen-Abströmbereich sowie ein Innen-Abströmbereich vorgesehen ist, besonders vorteilhaft ist, da dann die jeweils in den Innenraum bzw. zur Außenumgebung hin fördernden Gebläse sowohl für die die Verdampfer-Wärmetauscheranordnung, als auch für die die Kondensator-Wärmetauscheranordnung umströmende Luft genutzt werden können.

## Patentansprüche

1. Fahrzeugtemperiersystem, umfassend:
- einen Kältemittelkreislauf (22) mit einem Kompressor (24), wenigstens einer von zu erwärmender Luft (L₁) umströmbaren Kondensator-Wärmetauscheranordnung (28, 28') und wenigstens einer von zu kühlender Luft (L₂) umströmbaren Verdampfer-Wärmetauscheranordnung (40, 40'),
- für die wenigstens eine Kondensator-Wärmetauscheranordnung (28, 28'):
a) einen durch eine erste Klappenanordnung (44) freigebbaren und absperrbaren ersten Zuströmbereich (48) und einen durch die erste Klappenanordnung (44) freigebbaren und absperrbaren zweiten Zuströmbereich (50),
b) einen durch eine zweite Klappenanordnung (56) freigebbaren und absperrbaren ersten Abströmbereich (62) und einen durch die zweite Klappenanordnung (56) freigebbaren und absperrbaren zweiten Abströmbereich (64),
- für die wenigstens eine Verdampfer-Wärmetauscheranordnung (40, 40'):
c) einen durch eine dritte Klappenanordnung (88) freigebbaren und absperrbaren dritten Zuströmbereich (78) und einen durch die dritte Klappenanordnung (88) freigebbaren und absperrbaren vierten Zuströmbereich (80),
d) einen durch eine vierte Klappenanordnung (92) freigebbaren und absperrbaren dritten Abströmbereich (84) und einen durch die vierte Klappenanordnung freigebbaren und absperrbaren vierten Abströmbereich (86),
wobei der zweite Abströmbereich (64) und der vierte Abströmbereich (86) zu einem Innen-Abströmbereich (70) führen oder/und der erste Abströmbereich (62) und der dritte Abströmbereich (84) zu einem Außen-Abströmbereich (66) führen,
**dadurch gekennzeichnet, dass** dem Innen-Abströmbereich (70) eine erste Förderanordnung (72) zum Fördern von Luft aus dem Innen-Abströmbereich (70) zugeordnet ist, und dass dem Außen-Abströmbereich (66) eine zweite Förderanordnung (68) zum Fördern von Luft aus dem Außen-Abströmbereich (66) zugeordnet ist.

2. Fahrzeugtemperiersystem nach Anspruch 1,
**dadurch gekennzeichnet, dass** dem Innen-Abströmbereich (70) die erste Förderanordnung (72) zum Fördern von Luft zu einem Fahrzeuginnenraum (54) zugeordnet ist,
und
dass dem Außen-Abströmbereich (66) die zweite Förderanordnung (68) zum Fördern von Luft zu einer Außenumgebung zugeordnet ist.

3. Fahrzeugtemperiersystem nach Anspruch 1 oder 2
**dadurch gekennzeichnet, dass** die erste Förderanordnung (72) wenigstens ein Radialgebläse, vorzugsweise Doppelradialgebläse, umfasst, oder/und
dass die zweite Förderanordnung (68) wenigstens ein Axialgebläse umfasst.

4. Fahrzeugtemperiersystem nach einem der Ansprüche 1 bis 3,
**dadurch gekennzeichnet, dass** der erste Zuströmbereich (48) und der dritte Zuströmbereich (78) zur Aufnahme von Luft aus einer Außenumgebung vorgesehen sind, und dass der zweite Zuströmbereich (50) und der vierte Zuströmbereich (80) zur Aufnahme von Luft aus einem Fahrzeuginnenraum (54) vorgesehen sind.

5. Fahrzeugtemperiersystem nach einem der Ansprüche 1 bis 4,
**dadurch gekennzeichnet, dass** wenigstens eine Kondensator-Wärmetauscheranordnung (28, 28') und wenigstens eine Verdampfer-Wärmetauscheranordnung (40, 40') einander bezüglich des diesen zugeordneten Innen-Abströmbereichs (70) oder/und Außen-Abströmbereichs (66) gegenüberliegend angeordnet sind.

6. Fahrzeugtemperiersystem nach einem der Ansprüche 1 bis 5,
**dadurch gekennzeichnet, dass** die erste Klappenanordnung (44), die zweite Klappenanordnung (56), die dritte Klappenanordnung (88) und die vierte Klappenanordnung (92) in einen Kühlbetriebsstellzustand stellbar sind, wobei im Kühlbetriebsstellzustand:
- die erste Klappenanordnung (44) den ersten Zuströmbereich (48) freigibt und den zweiten Zuströmbereich (50) absperrt,
- die zweite Klappenanordnung (56) den ersten Abströmbereich (62) freigibt und den zweiten Abströmbereich (64) absperrt,
- die dritte Klappenanordnung (88) den dritten Zuströmbereich (78) absperrt und den vierten Zuströmbereich (80) freigibt,
- die vierte Klappenanordnung (92) den dritten Abströmbereich (84)
absperrt und den vierten Abströmbereich (86) freigibt, oder/und in einen Heizbetriebsstellzustand stellbar sind, wobei im Heizbetriebsstellzustand:
- die erste Klappenanordnung (44) den ersten Zuströmbereich (48) absperrt und den zweiten Zuströmbereich (50) freigibt,
- die zweite Klappenanordnung (56) den ersten Abströmbereich (62) absperrt und den zweiten Abströmbereich (64) freigibt,
- die dritte Klappenanordnung (88) den dritten Zuströmbereich (78) freigibt und den vierten Zuströmbereich (80) absperrt,
- die vierte Klappenanordnung (92) den dritten Abströmbereich (84) freigibt und den vierten Abströmbereich (86) absperrt.

7. Fahrzeugtemperiersystem nach einem der Ansprüche 1 bis 6,
**dadurch gekennzeichnet, dass** wenigstens eine Klappenanordnung (44, 88), vorzugsweise die erste Klappenanordnung (44) oder/und die dritte Klappenanordnung (88), als Einzelklappenanordnung ausgebildet ist, wobei in einem ersten Stellzustand der Einzelklappenanordnung die Klappe (46, 90) der Einzelklappenanordnung einen der Einzelklappenanordnung zugeordneten Zu- oder Abströmbereich (48, 78) freigibt und einen anderen der Einzelklappenanordnung zugeordneten Zu- oder Abströmbereich (50, 80) absperrt und wobei in einem zweiten Stellzustand der Einzelklappenanordnung die Klappe (46, 90) der Einzelklappenanordnung den einen Zu- oder Abströmbereich (48, 78) absperrt und den anderen Zu- oder Abströmbereich (54, 80) freigibt, oder/und
dass wenigstens eine Klappenanordnung (56, 92), vorzugsweise die zweite Klappenanordnung (56) oder/und die vierte Klappenanordnung (92), als Doppelklappenanordnung ausgebildet ist, wobei in einem ersten Stellzustand der Doppelklappanordnung eine erste Klappe (58, 94) der Doppelklappenanordnung einen der Doppelklappenanordnung zugeordneten Zu- oder Abströmbereich (62, 84) freigibt und eine zweite Klappe (60, 96) der Doppelklappenanordnung einen anderen der Doppelklappenanordnung zugeordneten Zu- oder Abströmbereich (64, 86) absperrt und wobei in einem zweiten Stellzustand der Doppelklappenanordnung die erste Klappe (58, 94) der Doppelklappenanordnung den einen Zu- oder Abströmbereich (62, 84) absperrt und die zweite Klappe (60, 96) der Doppelklappenanordnung den anderen Zu- oder Abströmbereich (64, 86) freigibt.

8. Fahrzeugtemperiersystem nach einem der Ansprüche 1 bis 7,
**dadurch gekennzeichnet, dass** jeder Klappenanordnung (44, 56, 88, 92), vorzugsweise jeder Klappe (46, 58, 60, 90, 94, 96) jeder Klappenanordnung (44, 56, 88, 92), ein eigenständiger Klappenantrieb zugeordnet ist.

9. Fahrzeugtemperiersystem nach einem der Ansprüche 1 bis 8,
**dadurch gekennzeichnet, dass** der Kältemittelkreislauf (22) wenigstens zwei Kondensator-Wärmetauscheranordnungen (28, 28') und wenigstens zwei Verdampfer-Wärmetauscheranordnungen (40, 40') umfasst, wobei jedem Paar von Kondensator-Wärmetauscheranordnung (28, 28') und Verdampfer-Wärmetauscheranordnung (40, 40') jeweils ein Innen-Abströmbereich (70) oder/und ein Außen-Abströmbereich (66) zugeordnet ist.

10. Fahrzeugtemperiersystem nach Anspruch 9,
**dadurch gekennzeichnet, dass** wenigstens zwei Kondensator-Wärmetauscheranordnungen (28, 28') zueinander parallel geschaltet sind,
oder/und
dass wenigstens zwei Verdampfer-Wärmetauscheranordnungen (40, 40') zueinander parallel geschaltet sind,
oder/und
dass bezüglich der Innen-Abströmbereiche (70) oder/und Außen-Abströmbereiche (66) bei jedem Paar von Kondensator-Wärmetauscheranordnung (28, 28') und Verdampfer-Wärmetauscheranordnung (40, 40') diese einander gegenüberliegend angeordnet sind und die Kondensator-Wärmetauscheranordnung (28, 28') eines Paares neben der Verdampfer-Wärmetauscheranordnung (40, 40') des anderen Paares angeordnet ist.

11. Fahrzeug, insbesondere Omnibus, umfassend einen Fahrzeuginnenraum (54) und ein Fahrzeugtemperiersystem (10) nach einem der vorhergehenden Ansprüche zum Speisen thermisch konditionierter Luft (L₁, L₂) in den Fahrzeuginnenraum (54).

12. Fahrzeug nach Anspruch 11,
**dadurch gekennzeichnet, dass** der erste Zuströmbereich (48) und der dritte Zuströmbereich (78) zur Aufnahme von Luft aus einer Außenumgebung angeordnet sind, und dass der zweite Zuströmbereich (50) und der vierte Zuströmbereich (80) zur Aufnahme von Luft aus dem Fahrzeuginnenraum (54) angeordnet sind.

13. Fahrzeug nach Anspruch 11 oder 12,
**dadurch gekennzeichnet, dass** wenigstens ein über wenigstens einen Innen-Abströmbereich (70) mit Luft gespeister Luftverteilungskanal (74) vorgesehen ist.

14. Fahrzeug nach Anspruch 13,
**dadurch gekennzeichnet, dass** ein erster Luftverteilungskanal (74') über einen ersten Innen-Abströmbereich (70) mit Luft gespeist ist und ein zweiter Luftverteilungskanal (74") über einen zweiten Innen-Abströmbereich (70) mit Luft gespeist ist, wobei der erste Luftverteilungskanal (74') vom zweiten Luftverteilungskanal (74") getrennt oder trennbar ist.

## Claims

1. Vehicle temperature control system, comprising:
- a refrigerant circuit (22) with a compressor (24), at least one condenser - heat exchanger assembly (28, 28') around which air (L₁) to be heated can flow and at least one evaporator - heat exchanger assembly (40, 40') around which air (L₂) to be cooled can flow,
- for the at least one condenser - heat exchanger assembly (28, 28'):
a) a first inflow area (48) which can be released and can be blocked by a first flap assembly (44) and a second inflow area (50) which can be released and can be blocked by the first flap assembly (44),
b) a first outflow area (62) which can be released and can be blocked by a second flap assembly (56) and a second outflow area (64) which can be released and can be blocked by the second flap assembly (56),
- for the at least one evaporator - heat exchanger assembly (40, 40'):
c) a third inflow area (78) which can be released and can be blocked by a third flap assembly (88) and a fourth inflow area (80) which can be released and can be blocked by the third flap assembly (88),
d) a third outflow area (84) which can be released and can be blocked by a fourth flap assembly (92) and a fourth outflow area (86) which can be released and can be blocked by the fourth flap assembly,
wherein the second outflow area (64) and the fourth outflow area (86) lead to an inner outflow area (70) or/and the first outflow area (62) and the third outflow area (84) lead to an outer outflow area (66),
**characterized in that** a first delivery device (72) is associated with the inner outflow area (70) for delivering air from the inner inflow area (70) and that a second delivery device (68) is associated with the outer outflow area (66) for delivering air from the outer outflow area (66).

2. Vehicle temperature control system in accordance with claim 1,
**characterized in that** the first delivery device (72) is associated with the inner outflow area (70) for delivering air to a vehicle interior (54),
and
that the second delivery device (68) is associated with the outer outflow area (66) for delivering air to an external environment.

3. Vehicle temperature control system in accordance with claims 1 or 2,
**characterized in that** the first delivery device (72) comprises at least one radial blower, preferably a double radial blower,
or/and
that the second delivery device (68) comprises at least one axial blower.

4. Vehicle temperature control system in accordance with one of the claims 1 through 3,
**characterized in that** the first inflow area (48) and the third inflow area (78) are intended for receiving air from an external environment, and that the second inflow area (50) and the fourth inflow area (80) are intended for receiving air from a vehicle interior (54).

5. Vehicle temperature control system in accordance with one of the claims 1 through 4,
**characterized in that** at least one condenser - heat exchanger assembly (28, 28') and at least one evaporator - heat exchanger assembly (40, 40') are arranged located opposite each other in relation to the inner outflow area (70) or/and the outer outflow area (66) associated with the same.

6. Vehicle temperature control system in accordance with one of the claims 1 through 5,
**characterized in that** the first flap assembly (44), the second flap assembly (56), the third flap assembly (88) and the fourth flap assembly (92) can be set in a cooling operation setting state, wherein in the cooling operation setting state:
- the first flap assembly (44) releases the first inflow area (48) and blocks the second inflow area (50),
- the second flap assembly (56) releases the first outflow area (62) and blocks the second outflow area (64),
- the third flap assembly (88) blocks the third inflow area (78) and releases the fourth inflow area (80),
- the fourth flap assembly (92) blocks the third outflow area (84) and releases the fourth outflow area (86),
or/and can be set in a heating operation setting state, wherein in the heating operation setting state:
- the first flap assembly (44) blocks the first inflow area (48) and releases the second inflow area (50),
- the second flap assembly (56) blocks the first outflow area (62) and releases the second outflow area (64),
- the third flap assembly (88) releases the third inflow area (78) and blocks the fourth inflow area (80),
- the fourth flap assembly (92) releases the third outflow area (84) and blocks the fourth outflow area (86).

7. Vehicle temperature control system in accordance with one of the claims 1 through 6,
**characterized in that** at least one flap assembly (44, 88), preferably the first flap assembly (44) or/and the third flap assembly (88), is configured as a single flap assembly, wherein in a first setting state of the single flap assembly the flap (46, 90) of the single flap assembly releases an inflow area or outflow area (48, 78) associated with the single flap assembly and blocks another inflow area or outflow area (50, 80) associated with the single flap assembly and wherein in a second setting state of the single flap assembly the flap (46, 90) of the single flap assembly blocks the one inflow area or outflow area (48, 78) and releases the other inflow area or outflow area (54, 80),
or/and
that at least one flap assembly (56, 92), preferably the second flap assembly (56) or/and the fourth flap assembly (92), is configured as a double flap assembly, wherein in a first setting state of the double flap assembly a first flap (58, 94) of the double flap assembly releases an inflow area or outflow area (62, 84) associated with the double flap assembly and a second flap (60, 92) of the double flap assembly blocks another inflow area or outflow area (64, 86) associated with the double flap assembly and wherein in a second setting state of the double flap assembly the first flap (58, 94) of the double flap assembly blocks the one inflow area or outflow area (62, 84) and the second flap (60, 96) of the double flap assembly releases the other inflow area or outflow area (64, 86).

8. Vehicle temperature control system in accordance with one of the claims 1 through 7,
**characterized in that** an independent flap drive is associated with each flap assembly (44, 56, 88, 92), preferably with each flap (46, 58, 60, 90, 94, 96) of each flap assembly (44, 56, 88, 92).

9. Vehicle temperature control system in accordance with one of the claims 1 through 8,
**characterized in that** the refrigerant circuit (22) comprises at least two condenser - heat exchanger assemblies (28, 28') and at least two evaporator - heat exchanger assemblies (40, 40'), wherein an inner outflow area (70) or/and an outer outflow area (66) each is associated with each condenser - heat exchanger assembly (28, 28') and evaporator - heat exchanger assembly (40, 40') pair.

10. Vehicle temperature control system in accordance with claim 9,
**characterized in that** at least two condenser - heat exchanger assemblies (28, 28') are connected parallel to one another,
or/and
that at least two evaporator - heat exchanger assemblies (40, 40') are connected parallel to one another,
or/and
that in regard to the inner outflow areas (70) or/and outer outflow areas (66) in each condenser - heat exchanger assembly (28, 28') and evaporator - heat exchanger assembly (40, 40') pair, these are arranged located opposite one another, and the condenser - heat exchanger assembly (28, 28') of one pair is arranged next to the evaporator - heat exchanger assembly (40, 40') of the other pair.

11. Vehicle, especially bus, comprising a vehicle interior (54) and a vehicle temperature control system (10) in accordance with one of the above claims for feeding thermally conditioned air (L₁, L₂) into the vehicle interior (54).

12. Vehicle in accordance with claim 11,
**characterized in that** the first inflow area (48) and the third inflow area (78) are arranged for receiving air from an external environment, and that the second inflow area (50) and the fourth inflow area (80) are arranged for receiving air from the vehicle interior (54).

13. Vehicle in accordance with claim 11 or 12,
**characterized in that** at least one air distribution duct (74) fed with air via at least one inner outflow area (70) is provided.

14. Vehicle in accordance with claim 13,
**characterized in that** a first air distribution duct (74') is fed with air via a first inner outflow area (70) and a second air distribution duct (74") is fed with air via a second inner outflow area (70), wherein the first air distribution duct (74') is separated or can be separated from the second air distribution duct (74").

## Revendications

1. Système de contrôle de la température d'un véhicule, comprenant :
- un circuit frigorifique (22) avec un compresseur (24), au moins un ensemble condenseur - échangeur de chaleur (28, 28') autour duquel l'air (L₁) à chauffer peut circuler et au moins un ensemble évaporateur - échangeur de chaleur (40, 40') autour duquel l'air (L₂) à refroidir peut circuler,
- pour l'ensemble condenseur - échangeur de chaleur (28, 28') au moins :
a) une première zone d'entrée (48) qui peut être libérée et peut être bloquée par un premier ensemble de clapets (44) et une deuxième zone d'entrée (50) qui peut être libérée et peut être bloquée par le premier ensemble de clapets (44),
b) une première zone de sortie (62) qui peut être libérée et peut être bloquée par un deuxième ensemble de clapets (56) et une deuxième zone de sortie (64) qui peut être libérée et peut être bloquée par le deuxième ensemble de clapets (56),
- pour ledit au moins un ensemble évaporateur - échangeur de chaleur (40, 40') :
c) une troisième zone d'entrée (78) qui peut être libérée et peut être bloquée par un troisième ensemble de clapets (88) et une quatrième zone d'entrée (80) qui peut être libérée et peut être bloquée par le troisième ensemble de clapets (88),
d) une troisième zone de sortie (84) qui peut être libérée et peut être bloquée par un quatrième ensemble de clapets (92) et une quatrième zone de sortie (86) qui peut être libérée et peut être bloquée par le quatrième ensemble de clapets,
dans laquelle la deuxième zone de sortie (64) et la quatrième zone de sortie (86) mènent à une zone de sortie intérieure (70) et/ou la première zone de sortie (62) et la troisième zone de sortie (84) mènent à une zone de sortie extérieure (66), **caractérisé en ce qu'**un premier dispositif de transport (72) est associé à la zone de sortie intérieure (70) pour distribuer de l'air provenant de la zone d'entrée intérieure (70) et **en ce qu'**un deuxième dispositif de distribution (68) est associé à la zone de sortie extérieure (66) pour distribuer de l'air provenant de la zone de sortie extérieure (66).

2. Système de contrôle de la température d'un véhicule selon la revendication 1, **caractérisé en ce que** le premier dispositif de transport (72) est associé à la zone de sortie intérieure (70) pour distribuer de l'air à l'intérieur d'un véhicule (54),
et
que le deuxième dispositif de distribution (68) est associé à la zone de sortie extérieure (66) pour distribuer de l'air dans un environnement extérieur.

3. Système de contrôle de la température d'un véhicule selon les revendications 1 ou 2, **caractérisé en ce que** le premier dispositif de transport (72) comprend au moins une soufflante radiale, de préférence une double soufflante radiale,
ou/et
que le deuxième dispositif de distribution (68) comprend au moins une soufflante axiale.

4. Système de contrôle de la température d'un véhicule selon l'une quelconque des revendications 1 à 3,
**caractérisé en ce que** la première zone d'entrée (48) et la troisième zone d'entrée (78) sont destinées à recevoir de l'air d'un environnement extérieur, et **en ce que** la deuxième zone d'entrée (50) et la quatrième zone d'entrée (80) sont destinées à recevoir de l'air de l'intérieur d'un véhicule (54).

5. Système de contrôle de la température d'un véhicule selon l'une quelconque des revendications 1 à 4,
**caractérisé en ce qu'**au moins un ensemble condenseur - échangeur de chaleur (28, 28') et au moins un ensemble évaporateur - échangeur de chaleur (40, 40') sont disposés à l'opposé l'un de l'autre par rapport à la zone de sortie intérieure (70) et/ou à la zone de sortie extérieure (66) qui leur est associée.

6. Système de contrôle de la température d'un véhicule selon l'une quelconque des revendications 1 à 5,
**caractérisé en ce que** le premier ensemble de clapets (44), le deuxième ensemble de clapets (56), le troisième ensemble de clapets (88) et le quatrième ensemble de clapets (92) peuvent être réglés dans un état de réglage de l'opération de refroidissement, dans lequel dans l'état de réglage de l'opération de refroidissement :
- le premier ensemble de clapets (44) libère la première zone d'entrée (48) et bloque la deuxième zone d'entrée (50),
- le deuxième ensemble de clapets (56) libère la première zone de sortie (62) et bloque la deuxième zone de sortie (64),
- le troisième ensemble de clapets (88) bloque la troisième zone d'entrée (78) et libère la quatrième zone d'entrée (80),
- le quatrième ensemble de clapets (92) bloque la troisième zone de sortie (84) et libère la quatrième zone de sortie (86),
ou/et peuvent être réglés dans un état de réglage de fonctionnement du chauffage, où dans l'état de réglage de fonctionnement du chauffage :
- le premier ensemble de clapets (44) bloque la première zone d'entrée (48) et libère la deuxième zone d'entrée (50),
- le deuxième ensemble de clapets (56) bloque la première zone de sortie (62) et libère la deuxième zone de sortie (64),
- le troisième ensemble de clapets (88) libère la troisième zone d'entrée (78) et bloque la quatrième zone d'entrée (80),
- le quatrième ensemble de clapets (92) libère la troisième zone de sortie (84) et bloque la quatrième zone de sortie (86).

7. Système de contrôle de la température d'un véhicule selon l'une quelconque des revendications 1 à 6,
**caractérisé en ce qu'**au moins un ensemble de clapets (44, 88), de préférence le premier ensemble de clapets (44) et/ou le troisième ensemble de clapets (88), est configuré comme un ensemble de clapets unique, dans lequel, dans un premier état de réglage de l'ensemble de clapets unique, le clapet (46, 90) de l'ensemble de clapets unique libère une zone d'entrée ou une zone de sortie (48, 78) associé à l'ensemble de clapets unique et bloque une autre zone d'entrée ou de sortie (50, 80) associée à l'ensemble de clapets unique et dans lequel, dans un deuxième état de réglage de l'ensemble de clapets unique, le clapet (46, 90) de l'ensemble de clapets unique bloque la première zone d'entrée ou de sortie (48, 78) et libère l'autre zone d'entrée ou de sortie (54, 80),
ou/et
qu'au moins un ensemble de clapets (56, 92), de préférence le deuxième ensemble de clapets (56) et/ou le quatrième ensemble de clapets (92), est configuré comme un ensemble de clapets doubles, dans lequel, dans un premier état de réglage de l'ensemble de clapets doubles, un premier clapet (58, 94) de l'ensemble de clapets doubles libère une zone d'entrée ou une zone de sortie (62, 84) associée à l'ensemble de clapets doubles et un deuxième clapet (60, 96) de l'ensemble de clapets doubles bloque une autre zone d'entrée ou de sortie (64, 86) associée à l'ensemble de clapets doubles et dans lequel, dans un deuxième état de réglage de l'ensemble de clapets doubles, le premier clapet (58, 94) de l'ensemble de clapets doubles bloque l'une des zones d'entrée ou de sortie (62, 84) et le deuxième clapet (60, 96) de l'ensemble de clapets doubles libère l'autre zone d'entrée ou de sortie (64, 86).

8. Système de contrôle de la température d'un véhicule selon l'une quelconque des revendications 1 à 7,
**caractérisé en ce qu'**un entraînement indépendant de clapets est associé à chaque ensemble de clapets (44, 56, 88, 92), de préférence à chaque clapet (46, 58, 60, 90, 94, 96) de chaque ensemble de clapets (44, 56, 88, 92).

9. Système de contrôle de la température d'un véhicule selon l'une quelconque des revendications 1 à 8,
**caractérisé en ce que** le circuit de réfrigérant (22) comprend au moins deux ensembles condenseur - échangeur de chaleur (28, 28') et au moins deux ensembles évaporateur - échangeur de chaleur (40, 40'), dans lequel une zone de sortie intérieure (70) et/ou une zone de sortie extérieure (66) sont chacune associées à chaque paire d'ensembles condenseur - échangeur de chaleur (28, 28') et évaporateur - échangeur de chaleur (40, 40').

10. Système de contrôle de la température d'un véhicule selon la revendication 9,
**caractérisé en ce qu'**au moins deux ensembles condenseur - échangeur de chaleur (28, 28') sont connectés en parallèle l'un à l'autre,
ou/et
qu'au moins deux ensembles évaporateur - échangeur de chaleur (40, 40') sont connectés en parallèle l'un à l'autre,
ou/et
que les zones de sortie intérieures (70) et/ou extérieures (66) de chaque paire condenseur - échangeur de chaleur (28, 28') et évaporateur - échangeur de chaleur (40, 40') sont disposées à l'opposé l'une de l'autre, et que le condenseur - échangeur de chaleur (28, 28') d'une paire est disposé à côté de l'évaporateur - échangeur de chaleur (40, 40') de l'autre paire.

11. Véhicule, en particulier autobus, comprenant un intérieur de véhicule (54) et un système de contrôle de la température d'un véhicule (10) selon l'une quelconque des revendications ci-dessus pour l'alimentation en air conditionné thermiquement (L₁, L₂) de l'intérieur du véhicule (54).

12. Véhicule selon la revendication 11,
**caractérisé en ce que** la première zone d'entrée (48) et la troisième zone d'entrée (78) sont agencées pour recevoir de l'air provenant d'un environnement extérieur, et **en ce que** la deuxième zone d'entrée (50) et la quatrième zone d'entrée (80) sont agencées pour recevoir de l'air provenant de l'intérieur du véhicule (54).

13. Véhicule selon les revendications 11 ou 12,
**caractérisé en ce qu'**il est prévu au moins un conduit de distribution d'air (74) alimenté en air par au moins une zone de sortie intérieure (70).

14. Véhicule selon la revendication 13,
**caractérisé en ce qu'**un premier conduit de distribution d'air (74') est alimenté en air par une première zone de sortie intérieure (70) et un second conduit de distribution d'air (74") est alimenté en air par une seconde zone de sortie intérieure (70), dans lequel le premier conduit de distribution d'air (74') est séparé ou peut être séparé du second conduit de distribution d'air (74").
